# EUROPÄISCHE PATENTANMELDUNG

(11) **EP 1 154 228 A1**
(43) Veröffentlichungstag der Anmeldung: **14.11.2001**
(21) Anmeldenummer: 00110325.8
(22) Anmeldetag: 13.05.2000
(51) Int. Cl.: G01B 11/26, G01C 19/66, G01C 19/72

(54) **Stossschützende Adaptionsvorrichtung für Laserkreisel**

(71) Anmelder: Prüftechnik Dieter Busch AG, 85737 Ismaning (DE)
(72) Erfinder: Lysen, Heinrich, 85748 Garching (DE)

(57) **Zusammenfassung**

Es wird ein Adapter für Laserkeisel vorgestellt, welcher gleichzeitig als Stoss-Schutz wirkt. Dazu wird eine Laserkeiselvorrichtung mit einem stabilen Gehäuse versehen, welches eine Ummantelung aus einem elastischen Werkstoff aufweist. An der Aussenhaut der Ummantelung ist mindetens ein reflektierendes Element vorgesehen. Das reflektierende Element steht in optischer Verbidung mit einer in dem Gehäuse fest angebrachten optischen Sende- und Empfangseinrichtung. Diese bestimmt eine winkelmässige Relativlage des reflektierenden Elementes gegenüber dem Gehäuse und damit relativ zur Laserkreiselvorrichtung. Auf diese Weise kann die Orientierung von zu vermessenden grossvolumigen Gegenständen relativ zur Laserkreiselvorrichtung sehr genau bestimmt werden, und eine Gefährdung des Gerätes durch Stösse wird signifikant gemindert.

## Beschreibung

Die Erfindung betrifft eine stossschützende und als Adapter verwendbare Vorrichtung für Laserkreisel.

Die Bereitstellung von mechanischen Adaptern für hochgenaue Kreisel, insbesondere solche in Form von Laserkreiseln, ist für zu vermessende Gegenstände in Form grossvolumiger Rollen oder Walzen mit erheblichen technischen Schwierigkeiten verbunden. Auch die turnusmässig notwendige Überprüfung der Genauigkeit solcher Adapter ist mit erheblichem Aufwand verbunden.

Auch die Bereitstellung eines geeigneten Stossschutzes für die empfindlichen Laserkreisel stellt ein erhebliches Problem dar, wenn der Stosschutz nur ein minimales Volumen einnehmen soll.

Es ist Aufgabe der Erfindung, sowohl einen geeigneten Stosschutz als auch eine geeignete Adaptionsvorrichtung für Laserkreisel bereitzustellen. Dabei soll der Stossschutz nicht nur eine Beschädigung beim Herabfallen oder zu harten Absetzen des Kreisels verhindern, sondern auch eine Stossminderung beim ordnungsgemässen Ansetzen des Kreisels and einen Gegenstand wie z.B. eine Walze aus Stahl bewirken.

Dieses Problem wird gemäss der Erfindung dadurch gelöst, dass eine Laserkreiselvorrichtung sich in einem stabilen Gehäuse befindet, welches eine Ummantelung aus einem elastischen Werkstoff aufweist, und dass an der Aussenhaut der Ummantelung mindestens ein reflektierendes Element angebracht ist. Das reflektierende Element steht in optischer Verbindung mit einer in dem stabilen Gehäuse fest angebrachten Sende- und Empfangseinrichtung für Lichtstrahlen, welche Einrichtungen nach an sich bekanntem Stand der Technik in der Lage sind, die winkelmässige Relativlage des reflektierenden Elementes gegenüber dem stabilen Gehäuse und somit gegenüber der Laserkreiselvorrichtung zu bestimmen. Prinzipiell wird dabei so vorgegangen, dass ein entsprechender Spiegel an einen zu vermessenden Gegenstand angedrückt wird, der Winkel zwischen den Laserkreiseln und dem Spiegel bestimmt und registriert wird, und sodann mit den Winkelwerten (z.B. Azimut, Elevation, Polarisation bzw. roll) des oder der Laserkreisel in Verrechnung gebracht wird.

Weitere Einzelheiten der Erfindung werden aus der Zeichnung ersichtlich.

Es zeigt
Fig. 1 eine Seitenansicht auf eine Walze und einen stossgeschützten Laserkreisel
Fig. 2 eine stirnseitige Ansicht auf eine vergleichbare Walze samt zugehöriger Seitenansicht

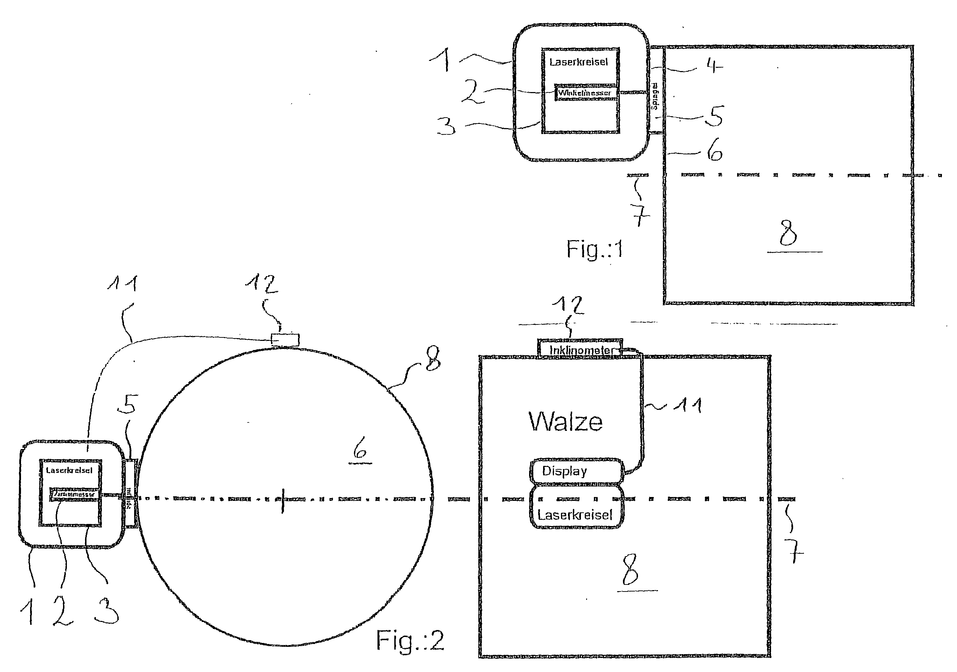

Wie aus Fig. 1 ersichtlich, benötigt die erfindungsgemässe Vorrichtung keine eigentliche mechanische Adaptionsvorrichtung wie z.B. in Form eines Prismas, sondern die stosschützende Vorrichtung kann direkt an einen zu vermessenden Gegenstand wie z.B. eine Walze 8 angesetzt werden. Wie in Fig. 1 ausgewiesen, wird ein Laserkreisel 3, der mindestens eine Winkellage elektronisch spezifizieren kann, durch eine Ummantelung 1 vor Stoss geschützt. An der Aussenhaut der Ummantelung ist ein Spiegel 5 unverrückbar, jedoch flexibel angebracht, so dass seine reflektierende Fläche 4 in Richtung des Laserkreisels zeigt.

Wird der Spiegel auf die Stirnfläche 6 der Walze 8 gedrückt, so wird durch die kombinierte Betrachtung der absoluten Laserkreisel-Lage und der Relativ-Ausrichtung des Spiegels 5 unter Zuhilfenahme eines Winkelmessgerätes 2 zu dieser, die azimutale und elevationsmässige Ausrichtung der Walze 8 errechenbar. Eine Winkellage bezüglich der Rotationsachse 7 der Walze 8 ist dabei unerheblich.

In Fig. 2 wird gezeigt, wie die stosschützende Vorrichtung samt Laserkreisel(n) in horizontaler Richtung und von der Seite her gegen die Walze 8 gedrückt wird.
Mit dieser Messung wird die azimutale Ausrichtung der Walze 8 bestimmt.
Die elevationsmässige Ausrichtung der Walze wird mit Vorteil dann durch ein genau arbeitendes elektronisches Inclinometer 12 bestimmt, welches mittels einer Signalleitung 11 mit einer dem Laserkreisel zugeordneten Elektronik in Wirkverbindung steht.
Die Positionierung des Inclinometers 12 auf dem Apex der Walze ist nicht kritisch, solange es genügend genau die elevationsmässige Ausrichtung der Drehachse 7 bestimmen kann.., wie dies in der linken Hälfte der Fig. 2 angegeben ist.

Anstelle der Verwendung des Inclinometers 12 kann auch in einem separaten Arbeitsschritt, und ggf. als Kontrollmessung, die stosschützende Vorrichtung samt Laserkreisel(n) von oben her gegen die Walze 8 gesetzt werden, wodurch ebenfalls deren elevationsmässige Ausrichtung bestimmt werden kann.

## Patentansprüche

1. Adaptionsvorrichtung zum stossgeschützten Ansetzen eines Laserkreisels an zu vermessende Gegenstände, **gekennzeichnet durch**
- eine an dem Gehäuse des Laserkreisels angebrachte Ummantelung aus einem elastischen Werkstoff, welche das Gehäuse zumindest teilweise umschliesst
- einen an der Ummantelung angebrachten Reflektor
- eine mit dem Gehäuse in fester Verbindung stehende Sende- und Empfangseinrichtung zur Bestimmung einer winkelmässigen Relativlage des Reflektors und damit derjenigen des zu vermessenden Gegenstandes gegenüber dem Laserkreisel

2. Verfahren zum Bestimmen der winkelmässigen Orientierung eines Gegenstandes im Raum, **gekennzeichnet durch** folgende Schritte:
- Ansetzen einer als Reflektor dienenden Referenzfläche an eine Gegenfläche oder eine Referenzlinie eines zu vermessenden Gegenstandes
- Bestimmung der Relativ-Orientierung der als Reflektor dienenden Referenzfläche gegenüber einem als Winkelmessgerät wirkenden, stossgeschützten Laserkreisel
- Bestimmung der Orientierung des Laserkreisels im Raum
- Bestimmung der tatsächlichen Orientierung des Gegenstandes im Raum unter Einbeziehung der bereits in den vorhergehenden Schritten bestimmten Orientierungen des Laserkreisels und zugehöriger Relativ-Orientierung der als Reflektor dienenden Referenzfläche.
